# EUROPEAN PATENT SPECIFICATION

(11) **EP 4 469 726 B1**
(45) Date of publication and mention of the grant of the patent: **11.03.2026**
(21) Application number: 23701115.0
(22) Date of filing: 19.01.2023
(51) Int. Cl.: F23G 5/50, F23G 7/06, F23N 1/02

(54) **A METHOD FOR CONTROLLING A THERMAL COMBUSTION SYSTEM**
VERFAHREN ZUR STEUERUNG EINES THERMISCHEN VERBRENNUNGSSYSTEMS
PROCÉDÉ DE COMMANDE D'UN SYSTÈME DE COMBUSTION THERMIQUE

(30) Priority: 28.01.2022 EP 22153928
(43) Date of publication of application: 04.12.2024
(73) Proprietor: Evonik Operations GmbH, 45128 Essen (DE)
(72) Inventor: LACARELLE, Arnaud, 61118 Bad Vilbel (DE); JORDAN, Gesine, 60318 Frankfurt (DE); LAMMERSEN, Thomas, 71034 Böblingen (DE); FULLER, Steve, Spanish Fort, Alabama 36527 (US); HARTONO, Benny, Singapore 128015 (SG); SCHULTE-LOH, Dietmar, 63517 Rodenbach (DE)
(74) Representative: Evonik Patent Association
(86) International application number: PCT/EP2023/051180
(87) International publication number: WO 2023/143992

(56) References cited:
- US-A1- 2002 033 125
- US-A1- 2011 269 081
- "The John Zink Hamworthy Combustion Handbook", vol. 2, 31 December 2013, CRC PRESS, Boca Raton, Florida, article CROCKETT, RODNEY ; HEINLEIN, JIM, XP055945393

## Description

The present invention relates to a method for controlling a thermal combustion system and to a control logic for a thermal combustion system.

Combustion can be described as the rapid oxidation of combustible, such as fuel, resulting in the release of usable heat and production of a visible flame. Combustion is still a difficult subject, being truly interdisciplinary and requiring the merging of knowledge and skills in several fields. It involves the study of chemistry, kinetics, thermodynamics, electromagnetic radiation, aerodynamics and fluid mechanics, including multiphase flow and turbulence, heat and mass transfer, and quantum mechanics to name a few.

Oil refining, chemical processes, and power generation are energy-intensive industries with combustion applications in burners, process heaters, boilers, and cogeneration system, as well as flares and thermal oxidizers. Combustion for these industries presents unique challenges related to the variety of fuel compositions encountered. Combustion equipment must be flexible to be able to operate in a safe, reliable, efficient, and environmentally responsible manner under a wide array of fuel compositions and conditions. Demands placed on combustion systems change continuously with time and are becoming more stringent. The safety of combustion systems has always been essential, but emphasis of effective heat transfer, temperature uniformity, equipment scale-up, efficiency, controls, and - more recently - environmental emissions and combustion-generated noise has evolved over time. Such demands create tremendous challenges for combustion engineers.

A combustion system typically includes a fuel supply, a combustion air supply, and an ignition system that all come together at one or more burners. Typically, these components are operated by means of a control system. Specifically, the purpose of the control system is to start, operate and shut down the combustion process and any related auxiliary processes safely, reliably, and efficiently. The control system consists of various physical and logical components chosen and assembled according to a control philosophy and arranged to provide the user with an informative, consistent, and easy-to-use interface. During system start-up and at various times during normal operation, it is necessary to verify or change the status of these systems. During system operation, the control system needs various items of process information to optimize system efficiency. Additionally, the control system monitors all safety parameters at any time and will shut down the combustion system, if any of the safety limits are not satisfied.

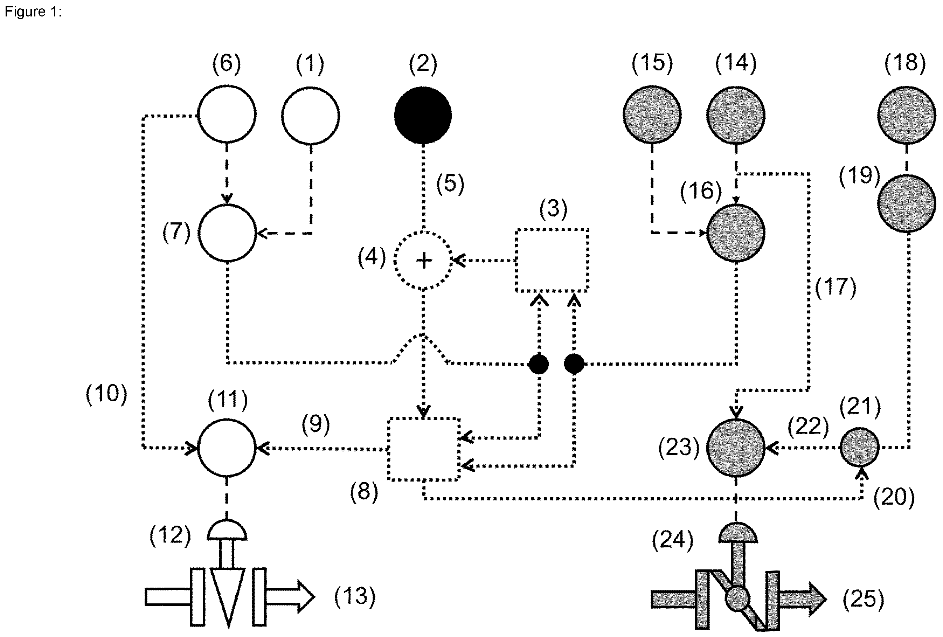

For this purpose, a combustion control system has temperature controllers and air-fuel ratio as well as oxygen controllers in thermal oxidizers - although oxygen controllers are in general required, they can be considered necessary regarding efficiency optimization. Further, some combustion control systems also apply a feed forward principle as known from the automation industry. A typical control logic for thermal oxidizer using multiple sources for fuels and oxygen is described in "The John Zink Hamworthy Combustion Handbook - Design and Operations Vol. 2", Charles E. Baukal Jr., editor, CRC Press, Boca Raton, Florida 2013 as follows:
Development of a fully metered control scheme for modulating fuel and air to the burner begins with the electronically linked parallel positioning scheme. Flow meters are linear with flow rate. Meter output signal scaling provides the firing rate and air to fuel ratio required for the application. The combustion air characterizer used for parallel positioning is not required because the transmitters are linear with flow rate. The temperature indicating controller (TIC) output sets the firing rate by serving as setpoint (SP) to each flow controller. Controller output mode, reverse or direct acting, defines the change in output signal direction with respect to process variable (PV) changes. For example, if the controller output increases as the PV increases, the controller mode is direct acting. In combustion control schemes, fail-closed fuel valves require a reverse-acting flow controller, while fail-open combustion air valves require direct-acting flow controllers. It is clear from controller mode definitions that the TIC should be reverse acting. That is, the TIC output should decrease, reducing the firing rate, in response to an increase in temperature, the PV. Addition of high and low signal selectors provides cross limiting of the fully metered control scheme. The low signal selector compares demanded firing rate from the TIC to the actual combustion airflow rate and applies the lower of the two signals as the SP to the fuel flow controller. The low signal selector ensures that the fuel SP cannot exceed the amount of air available for combustion. The high signal selector compares demanded firing rate from the TIC to actual fuel flow rate and applies the higher of the two signals as the SP to the airflow controller. This ensures that the SP is never lower than required for combustion of actual fuel flow rate. Together, the high and low signal selectors ensure that unburned fuel does not occur in the combustion system. Unburned fuel accumulations can cause explosions. Cross limiting by the signal selectors causes airflow to lead fuel flow during load increases and for airflow to lag fuel flow during fuel decreases. This lead/lag action explains why the fully metered cross-limiting control system is often called "lead-lag" control. Whatever the name, the system performs the function of maintaining the desired air/fuel mixture during load changes. The system also provides fuel flow rate reduction in the even airflow is lost or decreased. It is possible to trim the control scheme using measurement of flue gas O₂ content. For most systems, the O₂ signal should be used to "trim", and not be a primary control. Many O₂ analyzers are high maintenance and/or too slow in response to be sued as a primary control in the combustion process. The O₂ controller is utilized for SP injections and provides tuning parameters to help process customization. High and low signal limiters restrict the O₂ controller output to a trimming function, normally 5 to 10% of the normal combustion airflow rate. A multiplication function (X) in the combustion airflow transmitter signal makes the O₂ trim adjustment. The multiplier gives a fixed trim gain. Substituting a summing function for the multiplier would result in high trim gain at low flow rates and could produce a combustion air deficiency. O₂ trim may be applied to the combustion airflow controller SP rather than the flow transmitter signal. If this technique is used, the airflow signal to the low signal selector must retain trim modification. Multiple fuels and O₂ sources are accommodated by the cross-limiting scheme, as shown in Figure 1. When multiple fuels are used, heating values must be normalized by adjusting flow transmitter spans or by addition of heating value multipliers. Similar methods are used to normalize O₂ content for multiple air sources.

However, the typical design of today's combustion control systems does not consider any variations in the flow of the combustibles, e.g., waste gas flow, which are fed to the combustion. In particular, waste gas flows may have variations in their flow. The rapid introduction or sudden loss waste flows into a combustion system of the prior art typically leads to temperature jumps and a likelihood of trips or loss of authorization for waste operation. Further, the last stage of oxidation systems of the prior art must be operated at over-stoichiometric conditions, i.e., an excess of air or oxygen for safe operation. This operation principle inevitably leads to the formation of nitrogen oxides, which reach even higher levels if bound nitrogen is present in the waste flow to the combustion system. However, environmental regulations set strict limits to the emission of nitrogen oxides from oxidation and combustion processes.

US 2011269081 A1 discloses a cross-limiting override control system configured to transmit remote set points to flow controllers configured to control the flow rates of a primary firing fuel and air to a combustion apparatus. A temperature controller is configured to transmit a temperature demand signal based on a temperature in a combustion zone in the combustion apparatus. An analyzer controller is configured to transmit a stoichiometric ratio control signal based on an excess oxygen level exiting the combustion zone in the combustion apparatus.

Accordingly, there was still a need for a method for controlling a thermal combustion system, which allows to solve the problems mentioned above.

It was found that this problem is solved in that first, the flow of a waste stream from a process underlying a known reaction is measured and when a change of flow is measured, predicting if the flow measured leads to a temperature change in the combustion of the stream of step a). When a temperature change is predicted, the ratio of air to compounds with calorific value and optional inert compounds in the waste stream is calculated, which is required to keep the temperature in the thermal combustion system constant, and the ratio is adjusted accordingly by increasing or decreasing the amount of fuel to be fed into the combustion system, and/or decreasing or increasing the amount of air to be fed into the combustion system.

Further, when the waste stream also comprises bound nitrogen, it is determined if the amount of nitrogen oxides to be formed in the combustion system can be kept at a minimum, when said combustion is performed with the ratio adjusted. When this is not the case, the ratio of air to compounds with calorific value and optional inert compounds in the combustion system is adjusted to a sub-stoichiometric value, which allows to keep the amount of nitrogen oxides to be formed in the combustion system at a minimum, wherein said sub-stoichiometric value is adjusted by an extremum-seeking controller.

An object of the present invention is therefore a method for controlling a thermal combustion system, comprising the steps of
a) measuring the flow of a waste stream comprising a compound with calorific value, wherein said waste stream comes from a process underlying a known reaction,
b) when a change of flow is measured in step a), predicting if the flow measured in step a) leads to a temperature change in the combustion of the stream of step a), wherein said predicting uses a diagram or equation, which allows to determine the temperature of the combustion system,
c) when a temperature change is predicted in step b), performing the steps of
   c1) calculating the ratio of air, air enriched oxygen or oxygen to compounds with calorific value in the stream of step a), which is required to keep the temperature in the thermal combustion system constant, and
   c2) adjusting the ratio calculated in step c1) by increasing or decreasing the amount of fuel to be fed into the combustion system, and/or decreasing or increasing the amount of air, air enriched oxygen or oxygen to be fed into the combustion system,
   and
d) when the waste stream of step a) also comprises bound nitrogen, performing the steps of
   d1) determining if the amount of nitrogen oxides to be formed in the combustion system can be kept at a minimum, when said combustion is performed with the ratio of step c2), and
   d2) when the requirement of step d1) is not met, adjusting the ratio of air, air enriched oxygen or oxygen to compounds with calorific value in the combustion system to a sub-stoichiometric value, which allows to keep the amount of nitrogen oxides to be formed in the combustion system at a minimum, wherein said sub-stoichiometric value is adjusted by an extremum-seeking controller (4).

The advantages of the method according to the present invention are:
- It has a quick response time to any changes in the mass/volume flow of a waste stream.
- It enables a flexible fuel and air, air enriched with oxygen, or oxygen distribution and therefore, provides the combustion system with a wider operational map.
- It considerably reduces temperature jumps upon rapid introduction or sudden loss of waste flows.
- It allows to operate the thermal oxidizer/combustion system constantly at the lowest possible load, which minimizes the costs for operating thermal oxidizer/combustion system.
- It comprises an automatic switch to a sub-stoichiometric operation, in particular in stage 1.
This allows the safe manipulation for operators and leads to less nitrogen oxides at the outlet of the thermal oxidizer/combustion system.

The method according to the present invention is not subject to any limitations regarding the phase of the waste stream. Rather, the waste stream is any type of fluid, i.e., a gaseous or liquid waste stream.

Further, the method according to the present invention is also not subject to any limitations regarding the composition of the waste stream. Therefore, said waste stream comprises one or more compounds with calorific value. In addition, said waste stream also can comprise an inert compound, i.e., a compound without calorific value, for example carbon dioxide. Preferably, the waste stream comprises a compound with calorific value and an inert compound.

In the context of the present invention the term sub-stoichiometric in connection with an oxidizer such as air, air enriched with oxygen, or oxygen is used as known to the person skilled in the art and denotes that an amount of said oxidizer is involved which is less than the stoichiometric amount of the oxidizer.

According to the method of the present invention, the waste stream comes from a process underlying a known reaction. It is therefore known which compounds with calorific value and optional inert compounds, i.e., compounds without calorific value, are contained in the waste stream. Based on the compounds which are fed to the combustion, the skilled person can set up the balance equation underlying the combustion reaction in question. Resolving said balance equation adequately allows to take the necessary measurements for maintaining the operation value constant.

The composition of the waste stream is essentially constant. Therefore, it is possible to set up a diagram or an equation which gives the temperature of the combustion system as a function of the ratio of air, air enriched with oxygen, or oxygen to compounds with calorific value and optional inert compounds. As it goes without saying, the inert compounds are not oxidized in the combustion. However, their presence in the waste stream and in the combustion system may have an effect on the temperature in the combustion system because of the heat capacity of the inert compounds. The method according to the present invention makes use of the thus obtained diagram or equation. Any changes in the flow of the waste stream automatically change the ratio of air, air enriched with oxygen, or oxygen to compounds with calorific value and optional inert compounds. When a change in the flow of the waste stream is measured, one can predict the temperature change resulting from said flow change. Resolving the balance equation for the combustion system (combustion reaction) adequately allows to take the necessary actions for maintaining the operation value constant.

In an embodiment of the method according to the present invention a temperature predicting controller predicts the temperature for the sub-stoichiometric value adjusted in step d2) using a diagram or equation, which allows to determine the temperature of the combustion system and checks if the predicted temperature is within the operating window for the combustion system.

In the context of the present invention the term operating window or operating window for the combustion system is used to denote the temperature range in which the combustion system can be operated. This temperature range has a temperature limit at the lower end of said temperature range and a temperature limit at the upper end of said temperature range, hereinafter also referred to as the maximum temperature. The definite value for the minimum temperature is given by the specific combustion system, i.e., the specific compounds with calorific value and optional inert compounds which are subjected to the combustion and the specific safety and environmental regulations on the combustion on the combustion of the specific compounds. Therefore, the term minimum temperature is hereinafter also used equivalent with the allowed minimum temperature. The definite value for the maximum temperature is given by the mechanical design conditions of the combustion unit.

In a preferred embodiment of the method according to the present invention the operating window has a temperature range with a minimum temperature and a maximum temperature, wherein the minimum temperature is given by the allowed minimum temperature for the combustion of waste streams and the maximum temperature is given by the mechanical design conditions of the combustion unit.

Consequently, the sub-stoichiometric value adjusted in step d2) needs to be checked if the corresponding temperature predicted by the temperature predicting controller is within or outside the operating window for the combustion system. In the first case, the sub-stoichiometric value is approved and in the second case, the sub-stoichiometric value is dismissed.

In a further embodiment of the method according to the present invention the sub-stoichiometric value adjusted in step d2) is approved when the temperature predicted by the temperature predicting controller is within the operating window for the combustion system.

In an alternative embodiment of the method according to the present invention the sub-stoichiometric value adjusted in step d2) is dismissed, when the temperature predicted by the temperature predicting controller is outside the operating window for the combustion system, and the method continues with the value adjusted in step c2).

In principle, the method according to the present invention is not subject to a specific design of the combustion. Therefore, it is not subject to any limitations regarding the number of stages in the combustion. Typically, a combustion unit has one or two stages. Nevertheless, it is preferred that the combustion in the method according to the present invention is a two-stage combustion.

In another embodiment of the method according to the present invention the combustion is a two-stage combustion.

Preferably, the steps a) to d) are performed in the first stage of the combustion. This allows to take the adequate measures based on the conditions, e.g., temperature, in the first combustion stage for the combustion in the second stage to have a combustion outlet which meets the safety, legal and environmental regulations with respect to the composition of the combustion outlet.

In a preferred embodiment of the method according to the present invention steps a) to d) are performed in the first stage in case of a two-stage combustion or in the first and second stage in case of a three-stage combustion.

For safety reasons, it is preferred that the overall ratio of air, air enriched with oxygen, or oxygen to compounds with calorific value and optional inert compounds in the stream of step a) is adjusted to a value which ensures an excess of oxygen in the outlet of the combustion unit. Specifically, the excess of air, air enriched with oxygen, or oxygen is sufficient to ensure a complete combustion.

In another embodiment of the method according to the present invention the overall ratio of air, air enriched with oxygen, or oxygen to compounds with calorific value and optional inert compounds in the stream of step a) is adjusted to a value which ensures an excess of oxygen in the outlet of the combustion unit.

In a further preferred embodiment of the method according to the present invention the excess of air, air enriched with oxygen, or oxygen is sufficient to ensure a complete combustion.

Situations may occur where the sub-stoichiometric conditions may lead to a temperature in the first stage, either measured or predicted in the first stage, which may reach or even exceed the maximum temperature. This temperature, however, would be out of the operation window of the method according to the present invention. In a situation like this, it is preferred that the ratio of air, air enriched with oxygen, or oxygen to compounds with calorific value and optional inert compounds in the combustion system is shifted to an over-stoichiometric value.

In another preferred embodiment of the method according to the present invention the ratio of air, air enriched with oxygen, or oxygen to compounds with calorific value and optional inert compounds in the combustion system is shifted to an over-stoichiometric value when the temperature measured or predicted in the first stage reaches or exceeds the maximum temperature.

In the context of the present invention the term sub-stoichiometric is used as known to the person skilled in the art and denotes that an amount of a reagent is involved which is more than the stoichiometric amount of the reagent.

In detail, the step c2) of the method according to the present invention comprises a temperature measurement in the first stage and in the outlet of the combustion unit, and the thus measured temperatures are set as set point of the ratio of air, air enriched with oxygen, or oxygen to compounds with calorific value. Next, the amount of fuel, which is necessary to maintain the temperature in the combustion system constant, is determined. In addition or alternatively, the amount of air, air enriched with oxygen or oxygen relative to compounds with calorific value and optional inert compounds, which is necessary to maintain the temperature in the combustion system constant, is determined.

In an embodiment of the method according to the present invention the step c2) comprises the steps
c2a) measuring the temperature in the first stage and in the outlet of the combustion unit,
c2b) setting the temperatures measured in step c2a) as a set point of the ratio of air, air enriched with oxygen, or oxygen to compounds with calorific value in the first stage or in the outlet, and
c2c) determining the amount of fuel being necessary to maintain the temperature in the combustion system constant, and/or
c2d) determining the amount of air, air enriched with oxygen or oxygen relative to compounds with calorific value, which is necessary to maintain the temperature in the combustion system constant.

The technical features of the method according to the present invention can be realized in a control logic for a thermal combustion system.

A further object of the present invention is therefore a control logic for a thermal combustion system, comprising
i) a flowmeter (1) for measuring the flow of a waste stream comprising a compound with calorific value,
ii) a temperature indicating controller (2) for predicting if a change of flow measured by the flowmeter leads to a temperature change in the combustion of the waste stream,
iii) a feed forward block (3) for increasing or decreasing the amount of fuel to be fed into the combustion system, and/or decreasing or increasing the amount of air, air enriched with oxygen or oxygen to be fed into the combustion system, and
iv) an extremum-seeking controller (4) for adjusting the ratio of air, air enriched with oxygen, or oxygen to compounds with calorific value in the combustion system to a sub-stoichiometric value.

The control logic according to the present invention is not subject to any limitations regarding the phase of the waste stream. Rather, the waste stream is any type of fluid, i.e., a gaseous or liquid waste stream.

Further, the control logic according to the present invention is also not subject to any limitations regarding the composition of the waste stream. Therefore, said waste stream comprises one or more compounds with calorific value. In addition, said waste stream also can comprise an inert compound, i.e., a compound without calorific value, for example carbon dioxide. Preferably, the waste stream comprises a compound with calorific value and an inert compound.

In an embodiment of the control logic according to the present invention the combustion has two stages, and each of them comprises a flowmeter, a temperature indicating controller, and a feed forward block.

The feed forward block is preferably implemented for each stage of the combustion system. The outlet of each temperature indicating controller (stage1 and outlet) is a set point of the ratio of air, air enriched with oxygen, or oxygen to compounds with calorific value and inert compounds. For each stage, a feed forward block, which then is also defined as a ratio of air, air enriched with oxygen, or oxygen to compounds with calorific value and inert compounds, is added to the outlet of each temperature indicating controller (1). This ensures a quick response of the control logic to disturbances in the waste stream flows.

The feed forward is derived from the adiabatic energy balance of the system, assuming that an immediate combustion of the compounds takes place in the combustion chamber, without consideration of any time delay or heat transfer to the wall, amongst others. The mathematical task underlying the feedforward is to maintain the temperature in the combustion chamber constant when changes in the flow of the waste stream occur. Mathematically, this means that the derivative of the temperature in the combustion chamber over the time should remain equal to zero. With this condition, the adiabatic energy equation can be rewritten for each flow change of a waste stream, which then allows to adjust the fuel flow being necessary to maintain the temperature in the combustion system constant (2).

Another transformation of each of these equations allows the calculation of the variation in the ratio of air, air enriched with oxygen, or oxygen to compounds with calorific value and inert compounds, which is the feed forward term added to the temperature controller outlet.

Alternatively, the results obtained in (2) can be used inside a feed forward block acting directly on the fuel flow rate controller. In that case, the feed forward block is removed from the temperature controller outlet (1) and implemented at the fuel flow rate controller set point.

In another embodiment of the control logic according to the present invention the feedforward block is adapted to perform the steps c2a) to c2c) or c2a), c2b) and c2d) of the method according to the present invention.

In a preferred embodiment of the control logic according to the present invention only the first stage comprises an extremum-seeking controller.

### Example:

The example herein is performed using a computational model of a process based on the method shown in figure 1. Process modelling is an established and reliable methodology used by engineers to simulate complex chemical processes before building the real plant. In the context of the example the combustion system was modelled in an own time resolved Excel based simulation. For easiness of the computation, the model is adiabatic and contains one 0-dimensional perfectly stirred reactor for each stage. These assumptions make the model (here the resulting combustion temperatures) much more reactive to changes in the different flows and compositions but is sufficient to demonstrate the effectiveness of the controller.

Using the above tool, a change in one of the waste flows (Low heating value < 5MJ/kg, so 10 order of magnitude less than natural gas) is simulated as a jump function (from 0 to 15000 Nm³/h within 1 iteration). This large flow rate change would lead theoretically to a high temperature peak which is observed in stage 1 and 2 immediately after the waste gas jump. It must be noted that in a real system, this jump would never occur that fast since the temperature recorded reacts much more slowly than shown by the theoretical calculation. Hence, the first jump can be for this demonstration ignored.

This large peak inevitably initiates the temperature controllers to adjust their output. Without the feedforward (forward switched OFF), this leads few iterations later to a much larger dip in the combustion temperature in stage 1 and 2 than when the feedforward is switched on. The deviation to the temperature set point is reduced by more than 50% with the feedforward switched ON and this large gain demonstrate the advantages of the proposed controller method.

The advantages of the control logic shown in this theoretical simulation have been confirmed in practice since two thermal oxidizers have been retrofitted with the proposed concept and both show that the temperature spikes remain well within the operating rage when large waste flow rate variations (most of the time shut-off of up to 30% of the total combustor volume and heat flow rates) are occurring.

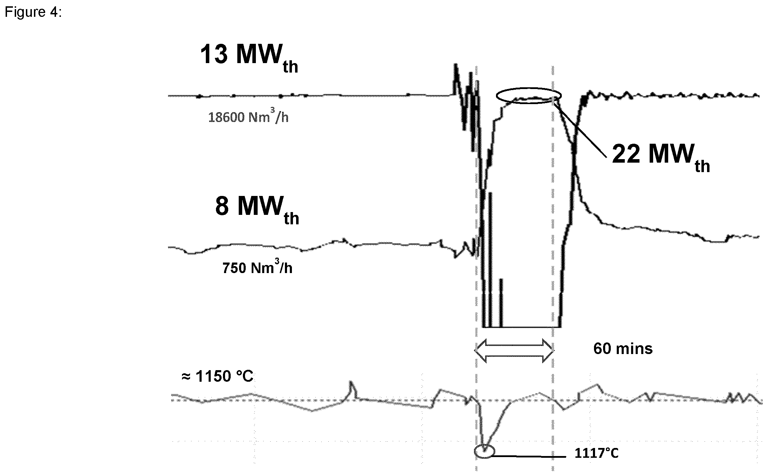

This performance is clearly visible on Figure 4 where the supply of the same waste stream used in the simulation and counting for a thermal load of 13 MWth is interrupted (plant trip). Immediately after the waste stream interruption, the natural gas flow increases quickly to compensate for the loss in heat load. A temperature dip of solely 33°C was recorded.

Less than 60 min after the loss of waste event, the same waste stream was sent back to the oxidizer at a slightly slower speed that during the waste stream interruption. This time, the temperature in the first stage was barely impacted by the waste stream start-up. This shows that the control logic is responding well independently of the waste stream switch direction to the oxidizer and the relative amount of energy sent to the oxidizer.

### Description of the figures:

Figure 1 is a detailed schematic representation of a control system according to the present invention with multiple fuels (clear circles) and O₂ sources (grey circles), and with the reference numbers having the following meaning
   - (1): waste fuel flow transmitter,
   - (2): temperature indicating controller (TIC),
   - (3): feedforward block,
   - (4): extremum seeking controller,
   - (5): difference setpoint (delta-SP),
   - (6): fuel flow transmitter,
   - (7): sum of (1) + (6),
   - (8): fuel and minimum air from delta,
   - (9): setpoint (SP),
   - (10): process variable (PV),
   - (11): flow indicating controller (FIC),
   - (12): fail closed,
   - (13): fuel gas or fuel oil to burner,
   - (14): waste air flow transmitter,
   - (15): combustion air flow transmitter,
   - (16): sum of (43) and (44),
   - (17): process variable (PV),
   - (18): analysis (oxygen) indicating transmitter for steam load or oxygen control,
   - (19): analysis (oxygen) indicating transmitter,
   - (20): setpoint (SP),
   - (21): high signal selector,
   - (22): setpoint (SP),
   - (23): flow indicating controller (FIC),
   - (24): fail open,
   - (25): combustion air to burner.

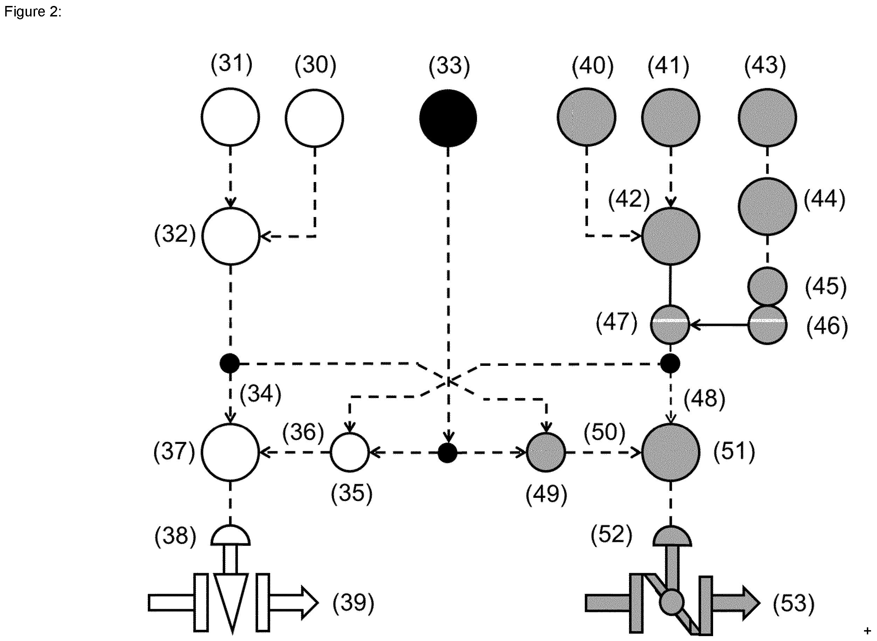

Figure 2 shows a John Zink controller with multiple fuels (clear circles) and O₂ sources (grey circles), with the reference numbers having the following meaning
   - (30): waste fuel flow transmitter,
   - (31): fuel flow transmitter,
   - (32): sum of (31) and (32),
   - (33): temperature indicating controller (TIC),
   - (34): process variable (PV),
   - (35): low signal selector,
   - (36): setpoint (SP),
   - (37): flow indicating controller (FIC),
   - (38): fail closed,
   - (39): fuel gas or fuel oil to burner,
   - (40): waste air flow transmitter,
   - (41): combustion air flow transmitter,
   - (42): sum of (40) and (41),
   - (43): analysis (oxygen) indicating transmitter of oxygen trim,
   - (44): analysis (oxygen) indicating controller of oxygen trim,
   - (45): low limit selector of oxygen trim,
   - (46): high limit selector of oxygen trim,
   - (47): multiplication function,
   - (48): process variable (PV),
   - (49): high signal selector,
   - (50): setpoint (SP),
   - (51): flow indicating controller (FIC),
   - (52): fail open,
   - (53): combustion air to burner.

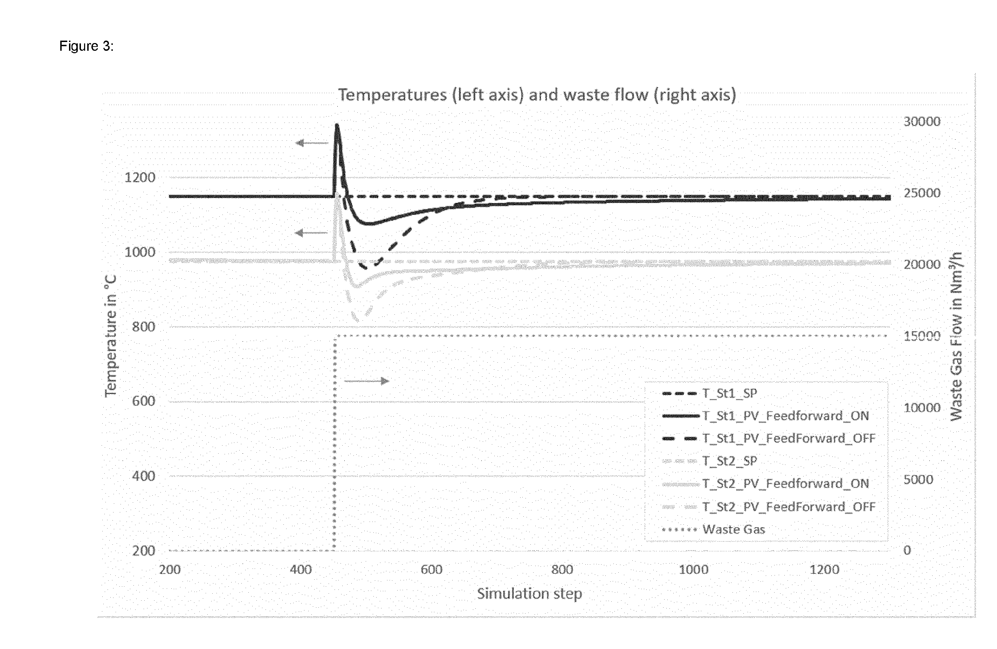

Figure 3 shows the comparison of a simulation with or without feedforward block
Figure 4 demonstrates the effectiveness of the control scheme in a real combustor upon large variations of one of the waste streams. The graph at the top represents a waste stream with an initial flow of 18600 Nm³/h and a calorific value of 13 MW, which stops abruptly and re-start 60 minutes later. The graph in the middle represents a fuel stream to secondary burners with an initial flow of 750 Nm³/h and a calorific value of 8 MW. When the waste stream flow stops, the fuel stream ramps up automatically and quickly to a calorific value of 22 MW. When the waste stream re-starts, the fuel stream drops back to the initial flow. The initial combustion temperature is approx. 1150°C. When the waste stream and its 13MW are removed suddenly from the combustion chamber, the combustion temperature is weakly affected, as it only drops by 33°C from 1150°C to 1117°C.

## Claims

1. A method for controlling a thermal combustion system, comprising the steps of
a) measuring the flow of a waste stream comprising a compound with calorific value, wherein said waste stream comes from a process underlying a known reaction,
b) when a change of flow is measured in step a), predicting if the flow measured in step a) leads to a temperature change in the combustion of the stream of step a), wherein said predicting uses a diagram or equation, which allows to determine the temperature of the combustion system,
c) when a temperature change is predicted in step b), performing the steps of
c1) calculating the ratio of air, air enriched with oxygen, or oxygen to compounds with calorific value in the stream of step a), which is required to keep the temperature in the thermal combustion system constant, and
c2) adjusting the ratio calculated in step c1) by increasing or decreasing the amount of fuel to be fed into the combustion system, and/or decreasing or increasing the amount of air, air enriched with oxygen, or oxygen to be fed into the combustion system,
and
d) when the waste stream of step a) also comprises bound nitrogen, performing the steps of
d1) determining if the amount of nitrogen oxides to be formed in the combustion system can be kept at a minimum, when said combustion is performed with the ratio of step c2), and
d2) when the requirement of step d1) is not met, adjusting the ratio of air, air enriched with oxygen, or oxygen to compounds with calorific value in the combustion system to a sub-stoichiometric value, which allows to keep the amount of nitrogen oxides to be formed in the combustion system at a minimum, wherein said sub-stoichiometric value is adjusted by an extremum-seeking controller (4).

2. The method according to claim 1, wherein a temperature predicting controller (2) predicts the temperature for the sub-stoichiometric value adjusted in step d2) using a diagram or equation, which allows to determine the temperature of the combustion system and checks if the predicted temperature is within the operating window for the combustion system.

3. The method according to claim 2, wherein the operating window has a temperature range with a minimum temperature and a maximum temperature, wherein the minimum temperature is given by the allowed minimum temperature for the combustion of waste streams and the maximum temperature is given by the mechanical design conditions of the combustion unit.

4. The method according to claim 2 or 3, wherein the sub-stoichiometric value adjusted in step d2) is approved when the temperature predicted by the temperature predicting controller (2) is within the operating window for the combustion system.

5. The method according to claim 2 or 3, wherein the sub-stoichiometric value adjusted in step d2) is dismissed, when the temperature predicted by the temperature predicting controller (2) is outside the operating window for the combustion system, and the method continues with the value adjusted in step c2).

6. The method according to any of claims 1 to 5, wherein the combustion is a two-stage combustion.

7. The method according to any of claims 1 to 6, wherein steps a) to d) are performed in the first stage in case of a two-stage combustion or in the first and second stage in case of a three-stage combustion.

8. The method according to claim 6 or 7, wherein the overall ratio of air, air enriched with oxygen, or oxygen to compounds with calorific value in the stream of step a) is adjusted to a value which ensures an excess of oxygen in the outlet of the combustion unit.

9. The method according to claim 8, wherein the excess of air, air enriched with oxygen, or oxygen is sufficient to ensure a complete combustion.

10. The method according to any of claims 6 to 9, wherein the ratio of air, air enriched with oxygen, or oxygen to compounds with calorific value and optional inert compounds in the combustion system is shifted to an over-stoichiometric value when the temperature measured or predicted in the first stage reaches or exceeds the maximum temperature.

11. The method according to any of claims 1 to 10, wherein the step c2) comprises the steps
c2a) measuring the temperature in the first stage and in the outlet of the combustion unit,
c2b) setting the temperatures measured in step c2a) as a set point of the ratio of air, air enriched with oxygen, or oxygen to compounds with calorific value in the first stage or in the outlet, and
c2c) determining the amount of fuel being necessary to maintain the temperature in the combustion system constant, and/or
c2d) determining the amount of air, air enriched with oxygen, or oxygen relative to compounds with calorific value, which is necessary to maintain the temperature in the combustion system constant.

12. A control logic for a thermal combustion system, comprising
i) a flowmeter (1) for measuring the flow of a waste stream comprising a compound with calorific value,
ii) a temperature indicating controller (2) for predicting if a change of flow measured by the flowmeter leads to a temperature change in the combustion of the waste stream,
iii) a feed forward block (3) for increasing or decreasing the amount of fuel to be fed into the combustion system, and/or decreasing or increasing the amount of air, air enriched with oxygen, or oxygen to be fed into the combustion system, and
iv) an extremum-seeking controller (4) for adjusting the ratio of air, air enriched with oxygen, or oxygen to compounds with calorific value in the combustion system to a sub-stoichiometric value.

13. The control logic according to claim 12, wherein the combustion has two stages, and each of them comprises a flowmeter, a temperature indicating controller, and a feed forward block.

14. The control logic according to claim 12 or 13, wherein the feedforward block is adapted to perform the steps c2a) to c2c) or c2a), c2b) and c2d) according to claim 11.

15. The control logic according to claim 13 or 14, wherein only the first stage comprises an extremum-seeking controller.

## Patentansprüche

1. Verfahren zur Steuerung eines thermischen Verbrennungssystems, folgende Schritte umfassend:
a) Messen des Durchflusses eines Abproduktstroms, der eine Verbindung mit Heizwert umfasst, wobei der Abproduktstrom aus einem Prozess stammt, der einer bekannten Reaktion zugrunde liegt,
b) wenn in Schritt a) eine Durchflussänderung gemessen wird, Vorhersagen, ob der in Schritt a) gemessene Durchfluss zu einer Temperaturänderung bei der Verbrennung des Stroms von Schritt a) führt, wobei das Vorhersagen ein Diagramm oder eine Gleichung nutzt, das/die es erlaubt, die Temperatur des Verbrennungssystems zu bestimmen,
c) wenn in Schritt b) eine Temperaturänderung vorhergesagt wird, Durchführen der folgenden Schritte:
c1) Berechnen des Verhältnisses von Luft, mit Sauerstoff angereicherter Luft oder Sauerstoff zu Verbindungen mit Heizwert in dem Strom von Schritt a), das erforderlich ist, um die Temperatur in dem thermischen Verbrennungssystem konstant zu halten,
und
c2) Einstellen des in Schritt c1) berechneten Verhältnisses durch Erhöhen oder Verringern der Menge an Brennstoff, die dem Verbrennungssystem zuzuführen ist, und/oder Verringern oder Erhöhen der Menge an Luft, mit Sauerstoff angereicherter Luft oder Sauerstoff, die dem Verbrennungssystem zuzuführen ist,
und
d) wenn der Abproduktstrom von Schritt a) auch gebundenen Stickstoff umfasst, Durchführen der folgenden Schritte:
d1) Bestimmen, ob die Menge an Stickstoffoxiden, die in dem Verbrennungssystem gebildet wird, minimal gehalten werden kann, wenn die Verbrennung mit dem Verhältnis von Schritt c2) durchgeführt wird, und
d2) wenn die Anforderung von Schritt d1) nicht erfüllt wird, Einstellen des Verhältnisses von Luft, mit Sauerstoff angereicherter Luft oder Sauerstoff zu Verbindungen mit Heizwert in dem Verbrennungssystem auf einen substöchiometrischen Wert, der es erlaubt, die Menge an Stickstoffoxiden, die in dem Verbrennungssystem gebildet wird, minimal zu halten, wobei der substöchiometrische Wert durch einen Extremwertregler (4) eingestellt wird.

2. Verfahren nach Anspruch 1, wobei ein temperaturvorhersagender Regler (2) die Temperatur für den in Schritt d2) eingestellten substöchiometrischen Wert vorhersagt, und zwar unter Nutzung eines Diagramms oder einer Gleichung, das/die es erlaubt, die Temperatur des Verbrennungssystems zu bestimmen, und prüft, ob die vorhergesagte Temperatur innerhalb des Betriebsfensters für das Verbrennungssystem liegt.

3. Verfahren nach Anspruch 2, wobei das Betriebsfenster einen Temperaturbereich mit einer Mindesttemperatur und einer Höchsttemperatur aufweist, wobei die Mindesttemperatur durch die zulässige Mindesttemperatur für die Verbrennung von Abproduktströmen vorgegeben ist und die Höchsttemperatur durch die mechanischen konstruktiven Gegebenheiten der Verbrennungseinheit vorgegeben ist.

4. Verfahren nach Anspruch 2 oder 3, wobei der in Schritt d2) eingestellte substöchiometrische Wert angenommen wird, wenn die durch den temperaturvorhersagenden Regler (2) vorhergesagte Temperatur innerhalb des Betriebsfensters für das Verbrennungssystem liegt.

5. Verfahren nach Anspruch 2 oder 3, wobei der in Schritt d2) eingestellte substöchiometrische Wert abgelehnt wird, wenn die durch den temperaturvorhersagenden Regler (2) vorhergesagte Temperatur außerhalb des Betriebsfensters für das Verbrennungssystem liegt, und das Verfahren mit dem in Schritt c2) eingestellten Wert fortfährt.

6. Verfahren nach einem der Ansprüche 1 bis 5, wobei es sich bei der Verbrennung um eine zweistufige Verbrennung handelt.

7. Verfahren nach einem der Ansprüche 1 bis 6, wobei die Schritte a) bis d) im Fall einer zweistufigen Verbrennung in der ersten Stufe oder im Fall einer dreistufigen Verbrennung in der ersten und zweiten Stufe durchgeführt werden.

8. Verfahren nach Anspruch 6 oder 7, wobei das Gesamtverhältnis von Luft, mit Sauerstoff angereicherter Luft oder Sauerstoff zu Verbindungen mit Heizwert in dem Strom von Schritt a) auf einen Wert eingestellt wird, der einen Sauerstoffüberschuss im Auslass der Verbrennungseinheit sicherstellt.

9. Verfahren nach Anspruch 8, wobei der Überschuss an Luft, mit Sauerstoff angereicherter Luft oder Sauerstoff ausreicht, um eine vollständige Verbrennung sicherzustellen.

10. Verfahren nach einem der Ansprüche 6 bis 9, wobei das Verhältnis von Luft, mit Sauerstoff angereicherter Luft oder Sauerstoff zu Verbindungen mit Heizwert und optionalen inerten Verbindungen in dem Verbrennungssystem auf einen überstöchiometrischen Wert verschoben wird, wenn die in der ersten Stufe gemessene oder vorhergesagte Temperatur die Höchsttemperatur erreicht oder überschreitet.

11. Verfahren nach einem der Ansprüche 1 bis 10, wobei der Schritt c2) folgende Schritte umfasst:
c2a) Messen der Temperatur in der ersten Stufe und im Auslass der Verbrennungseinheit,
c2b) Festlegen der in Schritt c2a) gemessenen Temperaturen als einen Sollwert des Verhältnisses von Luft, mit Sauerstoff angereicherter Luft oder Sauerstoff zu Verbindungen mit Heizwert in der ersten Stufe oder im Auslass und
c2c) Bestimmen der Menge an Brennstoff, die notwendig ist, um die Temperatur in dem Verbrennungssystem konstant zu halten, und/oder
c2d) Bestimmen der Menge an Luft, mit Sauerstoff angereicherter Luft oder Sauerstoff bezogen auf Verbindungen mit Heizwert, die notwendig ist, um die Temperatur in dem Verbrennungssystem konstant zu halten.

12. Steuerlogik für ein thermisches Verbrennungssystem, umfassend:
i) einen Durchflussmesser (1) zum Messen des Durchflusses eines Abproduktstroms, der eine Verbindung mit Heizwert umfasst,
ii) einen temperaturanzeigenden Regler (2) zum Vorhersagen, ob eine durch den Durchflussmesser gemessene Durchflussänderung zu einer Temperaturänderung bei der Verbrennung des Abproduktstroms führt,
iii) einen Vorwärtszweig-Block (3) zum Erhöhen oder Verringern der Menge an Brennstoff, die dem Verbrennungssystem zuzuführen ist, und/oder Verringern oder Erhöhen der Menge an Luft, mit Sauerstoff angereicherter Luft oder Sauerstoff, die dem Verbrennungssystem zuzuführen ist, und
iv) einen Extremwertregler (4) zum Einstellen des Verhältnisses von Luft, mit Sauerstoff angereicherter Luft oder Sauerstoff zu Verbindungen mit Heizwert in dem Verbrennungssystem auf einen substöchiometrischen Wert.

13. Steuerlogik nach Anspruch 12, wobei die Verbrennung zwei Stufen aufweist und jede von diesen einen Durchflussmesser, einen temperaturanzeigenden Regler und einen Vorwärtszweig-Block umfasst.

14. Steuerlogik nach Anspruch 12 oder 13, wobei der Vorwärtszweig-Block dazu ausgelegt ist, die Schritte c2a) bis c2c) oder c2a), c2b) und c2d) nach Anspruch 11 durchzuführen.

15. Steuerlogik nach Anspruch 13 oder 14, wobei nur die erste Stufe einen Extremwertregler umfasst.

## Revendications

1. Procédé de commande d'un système de combustion thermique, comprenant les étapes de
a) mesure du débit d'un flux de déchets comprenant un composé ayant une valeur calorifique, ledit flux de déchets provenant d'un procédé sous-jacent à une réaction connue,
b) lorsqu'un changement de débit est mesuré à l'étape a), prédiction si le débit mesuré à l'étape a) conduit à un changement de température dans la combustion du flux de l'étape a), ladite prédiction utilisant un diagramme ou une équation, qui permet de déterminer la température du système de combustion,
c) lorsqu'un changement de température est prédit à l'étape b), réalisation des étapes de
c1) calcul du rapport d'air, d'air enrichi en oxygène, ou d'oxygène par rapport aux composés ayant une valeur calorifique dans le flux de l'étape a), qui est requis pour maintenir la température dans le système de combustion thermique constante,
et
c2) ajustement du rapport calculé à l'étape c1) en augmentant ou diminuant la quantité de combustible à alimenter dans le système de combustion, et/ou en diminuant ou augmentant la quantité d'air, d'air enrichi en oxygène, ou d'oxygène à alimenter dans le système de combustion,
et
d) lorsque le flux de déchets de l'étape a) comprend également de l'azote lié, réalisation des étapes de
d1) détermination si la quantité d'oxydes d'azote à former dans le système de combustion peut être maintenue à un minimum, lorsque ladite combustion est réalisée avec le rapport de l'étape c2), et
d2) lorsque l'exigence de l'étape d1) n'est pas satisfaite, ajustement du rapport d'air, d'air enrichi en oxygène, ou d'oxygène par rapport aux composés ayant une valeur calorifique dans le système de combustion à une valeur sous-stœchiométrique, qui permet de maintenir la quantité d'oxydes d'azote à former dans le système de combustion à un minimum, ladite valeur sous-stœchiométrique étant ajustée par un dispositif de commande de recherche d'extremum (4).

2. Procédé selon la revendication 1, un dispositif de commande de prédiction de température (2) prédisant la température pour la valeur sous-stœchiométrique ajustée à l'étape d2) en utilisant un diagramme ou une équation, qui permet de déterminer la température du système de combustion et vérifie si la température prédite est dans la fenêtre de fonctionnement pour le système de combustion.

3. Procédé selon la revendication 2, la fenêtre de fonctionnement ayant une plage de température avec une température minimale et une température maximale, la température minimale étant donnée par la température minimale autorisée pour la combustion de flux de déchets et la température maximale étant donnée par les conditions de conception mécanique de l'unité de combustion.

4. Procédé selon la revendication 2 ou 3, la valeur sous-stœchiométrique ajustée à l'étape d2) étant approuvée lorsque la température prédite par le dispositif de commande de prédiction de température (2) est dans la fenêtre de fonctionnement pour le système de combustion.

5. Procédé selon la revendication 2 ou 3, la valeur sous-stœchiométrique ajustée à l'étape d2) étant rejetée, lorsque la température prédite par le dispositif de commande de prédiction de température (2) est à l'extérieur de la fenêtre de fonctionnement pour le système de combustion, et le procédé continuant avec la valeur ajustée à l'étape c2).

6. Procédé selon l'une quelconque des revendications 1 à 5, la combustion étant une combustion à deux étages.

7. Procédé selon l'une quelconque des revendications 1 à 6, les étapes a) à d) étant réalisées dans le premier étage dans le cas d'une combustion à deux étages ou dans les premier et deuxième étages dans le cas d'une combustion à trois étages.

8. Procédé selon la revendication 6 ou 7, le rapport global d'air, d'air enrichi en oxygène, ou d'oxygène par rapport aux composés ayant une valeur calorifique dans le flux de l'étape a) étant ajusté à une valeur qui assure un excès d'oxygène dans la sortie de l'unité de combustion.

9. Procédé selon la revendication 8, l'excès d'air, d'air enrichi en oxygène, ou d'oxygène étant suffisant pour assurer une combustion complète.

10. Procédé selon l'une quelconque des revendications 6 à 9, le rapport d'air, d'air enrichi en oxygène, ou d'oxygène par rapport aux composés ayant une valeur calorifique et aux composés inertes optionnels dans le système de combustion étant décalé vers une valeur sur-stœchiométrique lorsque la température mesurée ou prédite dans le premier étage atteint ou dépasse la température maximale.

11. Procédé selon l'une quelconque des revendications 1 à 10, l'étape c2) comprenant les étapes de
c2a) mesure de la température dans le premier étage et dans la sortie de l'unité de combustion,
c2b) établissement des températures mesurées à l'étape c2a) comme point de consigne du rapport d'air, d'air enrichi en oxygène, ou d'oxygène par rapport aux composés ayant une valeur calorifique dans le premier étage ou dans la sortie, et
c2c) détermination de la quantité de combustible nécessaire pour maintenir la température dans le système de combustion constante, et/ou
c2d) détermination de la quantité d'air, d'air enrichi en oxygène, ou d'oxygène par rapport aux composés ayant une valeur calorifique, qui est nécessaire pour maintenir la température dans le système de combustion constante.

12. Logique de commande pour un système de combustion thermique, comprenant
i) un débitmètre (1) pour mesurer le débit d'un flux de déchets comprenant un composé ayant une valeur calorifique,
ii) un dispositif de commande d'indication de température (2) pour prédire si un changement de débit mesuré par le débitmètre conduit à un changement de température dans la combustion du flux de déchets,
iii) un bloc d'alimentation en aval (3) pour augmenter ou diminuer la quantité de combustible à alimenter dans le système de combustion, et/ou diminuer ou augmenter la quantité d'air, d'air enrichi en oxygène, ou d'oxygène à alimenter dans le système de combustion, et
iv) un dispositif de commande de recherche d'extremum (4) pour ajuster le rapport d'air, d'air enrichi en oxygène, ou d'oxygène par rapport aux composés ayant une valeur calorifique dans le système de combustion à une valeur sous-stœchiométrique.

13. Logique de commande selon la revendication 12, la combustion ayant deux étages, et chacun d'eux comprenant un débitmètre, un dispositif de commande d'indication de température, et un bloc d'alimentation en aval.

14. Logique de commande selon la revendication 12 ou 13, le bloc d'alimentation en aval étant adapté pour réaliser les étapes c2a) à c2c) ou c2a), c2b) et c2d) selon la revendication 11.

15. Logique de commande selon la revendication 13 ou 14, seul le premier étage comprenant un dispositif de commande de recherche d'extremum.
